# EUROPÄISCHE PATENTSCHRIFT

(11) **EP 0 861 175 B1**
(45) Veröffentlichungstag und Bekanntmachung des Hinweises auf die Patenterteilung: **14.07.2004**
(21) Anmeldenummer: 96937271.3
(22) Anmeldetag: 28.10.1996
(51) Int. Cl.: B60T 8/40, B60T 17/02

(54) **ELEKTRONISCH STEUERBARE BREMSANLAGE FÜR KRAFTFAHRZEUGE**
ELECTRONICALLY ADJUSTABLE BRAKE SYSTEM FOR MOTOR VEHICLES
SYSTEME DE FREINAGE A COMMANDE ELECTRONIQUE POUR VEHICULES A MOTEUR

(30) Priorität: 15.11.1995 DE 19542654
(43) Veröffentlichungstag der Anmeldung: 02.09.1998
(73) Patentinhaber: Lucas Industries Limited, West Midlands B90 4LA (GB)
(72) Erfinder: VOGES, Dieter, D-56070 Koblenz/Kesselheim (DE); LUBISCHER, Frank, D-56154 Boppard-Udenhausen (DE)
(74) Vertreter: Schmidt, Steffen J., Dipl.-Ing.
(86) Internationale Anmeldenummer: PCT/EP1996/004685
(87) Internationale Veröffentlichungsnummer: WO 1997/018114

(56) Entgegenhaltungen:
- EP-A- 0 268 440
- WO-A-90/04530
- WO-A-91/05688
- WO-A-95/31362
- DE-A- 2 219 468
- DE-A- 3 623 392
- DE-A- 3 737 726
- PATENT ABSTRACTS OF JAPAN vol. 16, no. 245 (M-1260), 4.Juni 1992 & JP 04 055154 A (JIDOSHA KIKI), 21.Februar 1992,

## Beschreibung

Die vorliegende Erfindung betrifft eine elektronisch steuerbare Bremsanlage für Kraftfahrzeuge, mit einer durch ein Bremspedal betätigbaren Bremsdruckgebereinheit, die wenigstens eine Radbremse des Kraftfahrzeuges durch einen Hydraulikfluidpfad mit Hydraulikfluid speist, einer ersten elektromagnetischen Ventilanordnung, die in dem Hydraulikfluidpfad zwischen der Bremsdruckgebereinheit und der Radbremse angeordnet ist, um Druckaufbau-, Druckabbau- und/oder Druckhaltephasen in der Radbremse zu steuern, einer motorbetriebenen steuerbaren Hydraulikdruckquelle, die die Radbremse zusätzlich zu dem oder anstelle der Bremsdruckgebereinheit mit Hydraulikfluid speist, und einer motorbetriebenen steuerbaren Hilfsenergiequelle, die eine Betätigung der Bremsdruckgebereinheit durch das Bremspedal unterstützt oder anstelle des Bremspedals eine Betätigung der Bremsdruckgebereinheit bewirkt, wobei die steuerbare Hilfsenergiequelle und die steuerbare Hydraulikdruckquelle durch den gleichen Motor angetrieben werden und mit diesem in ständiger getrieblicher Verbindung stehen, und wobei die erste Ventilanordnung und der Motor durch eine elektronische Steuereinheit im Betrieb der Bremsanlage mit entsprechenden Steuersignalen angesteuert werden. Eine solche Bremsanlage beschreibt auch die DE-A-3 737 726.

Aus der DE 32 19 133 A1 ist eine ähnliche Anordnung bekannt, bei der ein Elektromotor zum Antrieb eines Ventilators eines Kraftfahrzeuges zusätzlich als Antrieb einer Pumpe verwendet wird, die einen Druckspeicher zur Versorgung einer Hilfskraftbremsanlage lädt. Der Elektromotor ist zusätzlich durch einen Druckschalter einschaltbar, der den Speicherdruck des Druckspeichers überwacht. Außerdem ist die Antriebswelle des Elektromotors über elektromagnetisch betätigbare Schaltkupplungen an die Pumpe ankoppelbar und von dem Ventilator abkoppelbar, wenn der Druckspeicher geladen wird.

Problematisch ist bei dieser Anordnung, daß üblicherweise der Elektromotor zum Antrieb des Ventilators, beispielsweise einer Kühleinrichtung des Kraftfahrzeuges in erheblichem räumlichen Abstand zu der Fahrzeugbremsanlage angeordnet ist, so daß relativ lange Druckleitungen von der mit dem Elektromotor gekoppelten Pumpe zu der Fahrzeugbremsanlage geführt werden müssen. Außerdem sind die beiden elektromagnetisch betätigbaren Kupplungen aufwendig und anfällig im Betrieb, so daß die dort vorgeschlagene Lösung unter Sicherheits- und Kostenaspekten für einen serienmäßigen Einsatz nur bedingt geeignet ist.

Dennoch besteht Bedarf an einer kompakten und gleichzeitig sicheren und kostengünstigen Möglichkeit, in einem Kraftfahrzeug vorhandene elektrische Aggregate mehrfach zu nutzen.

Die Dokumente Patent Abstracts of Japan, vol. 16, no. 245 (M―1260), 4.6.1992 & JP 04 055154, EP-A―0 268 440, WO―A-9 105 688, WO―A―9 004 530 DE-A―3 623 392, DE―A-2 219 468, und WO―A―9 531 362 zeigen weiteren Stand der Technik.

Die Erfindung schlägt zur Lösung des Problems vor, dass eine Einlaßseite und eine Auslaßseite der steuerbaren Hydraulikdruckquelle in Abhängigkeit von einer Ventilstellung der ersten Ventilanordnung auf etwa gleiches Druckniveau bringbar sind, indem die erste Ventilanordnung durch Steuersignale aus der elektronischen Steuereinheit in eine von der Druckaufbau, Druckabbau- oder Druckhaltephase abweichende Stellung gebracht wird.

Durch die Verwendung eines gemeinsamen Motors für die steuerbare Hydraulikquelle und die steuerbare Hilfsenergiequelle ist sichergestellt, daß lange Leitungswege vermieden werden. Durch die ständige getriebliche Verbindung zwischen dem gemeinsamen Motor für die steuerbare Hydraulikdruckquelle und für die steuerbare Hilfsenergiequelle entfallen die fehleranfälligen und aufwendigen elektromagnetischen Kupplungen.

Gemäß einer ersten Ausführungsform ist die steuerbare Hilfsenergiequelle eine pneumatische Pumpe, die auf einen mit dem Bremsdruckgeber gekoppelten pneumatischen Bremskraftverstärker wirkt. Dabei kann die pneumatische Pumpe sowohl eine Überdruckpumpe als auch eine Unterdruckpumpe sein. Je nach dem ob die pneumatische Pumpe eine Überdruck- oder eine Unterdruckpumpe ist, erfolgt die Einspeisung der Hilfsenergie in den pneumatischen Bremskraftverstärker in die Unterdruckkammer oder die Atmosphärenkammer.

Vorzugsweise ist die pneumatische Pumpe eine Unterdruckpumpe, die an die Stelle einer Verbindung zu einem Ansaugstutzen eines Ottomotors tritt.

Vorzugsweise ist zwischen der pneumatischen Pumpe und dem Bremskraftverstärker eine zweite steuerbare Ventilanordnung vorgesehen, mit der - durch eine elektronische Steuereinheit gesteuert - eine Betätigung des Bremsdruckgebers durch das Bremspedal unterstützt werden kann oder anstelle des Bremspedals eine Betätigung des Bremsdruckgebers bewirkt werden kann.

Wenn die Pumpe beispielsweise sowohl auf der Einlaßseite als auch auf der Auslaßseite mit der Umgebungsatmosphäre verbunden ist, hat dies zur Folge, daß die Pumpe praktisch lastfrei läuft, so daß sich die Energieaufnahme des Motors erheblich verringert.

In entsprechender Weise für die steuerbare Hydraulikdruckquelle ist bei einer besonders bevorzugten Ausführungsform der Erfindung eine Einlaßseite und eine Auslaßseite der steuerbaren Hydraulikdruckquelle in Abhängigkeit von einer Ventilstellung der ersten Ventilanordnung auf etwa gleiches Druckniveau bringbar. Dies bedeutet, daß - ebenfalls durch die elektronische Steuereinrichtung gesteuert - der Motor durch den Betrieb der Hydraulikdruckquelle kaum belastet ist, wenn diese am Einlaß und am Auslaß auf gleichem Druckniveau liegt, also der Einlaß mit dem Auslaß praktisch verbunden ist.

Gemäß einer weiteren Ausführungsform der Erfindung ist die steuerbare Hilfsenergiequelle eine hydraulische Pumpe, die auf eine mit dem Bremsdruckgeber gekoppelte Zylinder/Kolbenanordnung wirkt.

Auch hier ist zu einer gezielten Unterstützung einer Bremspedalbetätigung bzw. für den gezielten Ersatz einer Bremspedalbetätigung zwischen der hydraulischen Pumpe und der Zylinder/Kolbenanordnung eine zweite steuerbare Ventilanordnung vorgesehen.

In gleicher Weise wie bei der ersten Ausführungsform ist die hydraulische Pumpe in Abhängigkeit von der Stellung der zweiten Ventilanordnung entweder mit der Zylinder/Kolbenanordnung verbunden, oder eine Einlaßseite und eine Auslaßseite der hydraulischen Pumpe sind auf etwa gleiches Druckniveau bringbar.

Um eine hohe Betätigungsdynamik der Bremsdruckgebereinheit durch die Zylinder/Kolbenanordnung zu gewährleisten, ist bei einer bevorzugten Ausführungsform die hydraulische Pumpe mit einem Druckspeicher verbindbar, wobei der Druckspeicher und/oder die hydraulische Pumpe durch eine dritte Ventilanordnung gesteuert mit der Zylinder/Kolbenanordnung verbindbar sind. Damit wird erreicht, daß ein beim elektronisch gesteuerten Betätigen der hydraulischen Pumpe sich erst langsam aufbauender Druck durch den im Druckspeicher vorhandenen Druck ergänzt werden kann, so daß die Betätigung der Zylinder/Kolbenanordnung mit hoher Geschwindigkeit erfolgen kann.

Die Bremsdruckgebereinheit weist vorzugsweise eine Druckkammer auf, die über die erste Ventilanordnung mit wenigstens einer Radbremse verbindbar ist und weist wenigstens eine zweite Druckkammer auf, die mit der hydraulischen Pumpe und/oder dem Druckspeicher für die zweite und/oder dritte Ventilanordnung verbindbar ist. Vorzugsweise sind dabei die erste und die zweite Druckkammer durch einen Kolben getrennt, auf den bei einer Normalbetätigung das Bremspedal wirkt. Dies hat zur Folge, daß eine Expansion der zweiten Druckkammer und durch Hydraulikfluideinspeisung von der hydraulischen Pumpe sich das Volumen der ersten Druckkammer verringert. Dies bedeutet, daß Hydraulikfluid aus der ersten Druckkammer in die Radbremse eingespeist wird.

Vorzugsweise sind die Abtriebswelle des Motors und die beiden Antriebswellen der hydraulischen Pumpe und der pneumatischen Pumpe koaxial zueinander angeordnet und starr miteinander verbunden. Dies gewährleistet einen sehr kompakten Aufbau der Gesamtanordnung und eine einfache Montage. Je nach den Dimensionierungen der einzelnen Pumpen bzw. des Motors kann auch ein Über- oder Untersetzungsgetriebe zwischen dem Motor und der jeweiligen Pumpe angeordnet sein.

Vorzugsweise ist die pneumatische Pumpe eine Unterdruckpumpe, die insbesondere als Flügelzellenpumpe ausgebildet ist, während die hydraulische Pumpe vorzugsweise eine Druckpumpe ist, die insbesondere als Radialkolbenpumpe oder als Axialkolbenpumpe ausgebildet ist.

Weitere Eigenschaften, Merkmale und Vorteile der Erfindung werden anhand der nachstehenden Figurenbeschreibung erläutert. Es zeigen:
- Fig. 1: eine schematische Darstellung einer ersten Ausführungsform einer erfindungsgemäßen elektronisch steuerbaren Bremsanlage für Kraftfahrzeuge,
- Fig. 2: eine schematische Darstellung einer zweiten Ausführungsform einer erfindungsgemäßen elektronisch steuerbaren Bremsanlage für Kraftfahrzeuge, und
- Fig. 3a, 3b: zwei Ausführungsformen möglicher Zusammenstellungen des Motors, der Hydraulikdruckquelle und der Hilfsenergiequelle im Rahmen einer Fahrzeugbremsanlage.

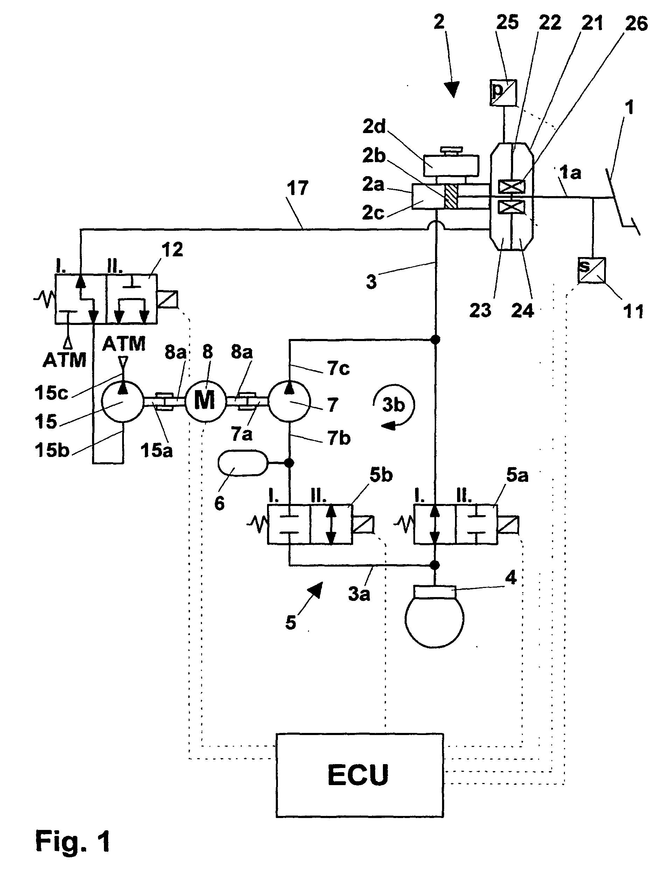

Fig. 1 zeigt eine erste Ausführungsform einer erfindungsgemäßen elektronischen steuerbaren Bremsanlage für Kraftfahrzeuge. Ein Bremspedal 1 dient dazu, über eine Betätigungsstange 1a eine Bremsdruckgebereinheit 2 zu betätigen. Die Bremsdruckgebereinheit 2 weist eine Zylinder/Kolbenanordnung 2a, 2b auf, die eine erste Druckkammer 2c bilden. Die Druckkammer 2c wird von einem Hydraulikfluidreservoir 2d gespeist. Von der Druckkammer 2c führt eine Hydraulikleitung 3 zu einer Radbremse 4 des Kraftfahrzeuges.

In der Hydraulikleitung 3 ist eine erste elektromagnetische Ventilanordnung 5a, 5b zwischen der Bremsdruckgebereinheit und der Radbremse angeordnet, um Druckaufbau-, Druckabbauund/oder Druckhaltephasen in der Radbremse zu steuern. Die erste Elektromagnetanordung 5a, 5b ist aus zwei Elektromagnetventilen 5a, 5b gebildet, die jeweils durch eine elektronische Steuereinheit ECU ansteuerbar sind. Im elektrisch unbetätigten Zustand ist das eine Elektromagnetventil 5a geöffnet und das zweite Elektromagnetventil 5b geschlossen, um in der Radbremse 4 Druck aufbauen zu können. Wenn nur das Elektromagnetventil 5a betätigt wird, bleibt das zweite Elektromagnetventil 5b geschlossen und auch das erste Elektromagnetventil 5a geht in seine abgesperrte Stellung, so daß der Druck in der Radbremse konstant gehalten wird. Werden sowohl das erste als auch das zweite Elektromagnetventil 5a, 5b betätigt, geht das erste Elektromagnetventil 5a in seine gesperrte Stellung, während das zweite Elektromagnetventil 5b in seiner geöffnete Stellung geht. In diesem Fall kann Hydraulikfluid aus der Radbremse 4 über eine Hydraulikleitung 3a durch das zweite Elektromagnetventil 5b in einen Hydraulikzwischenspeicher 6 abfließen. Über eine Hydraulikdruckquelle in Form einer Hydraulikpumpe 7 wird das in dem Hydraulikzwischenspeicher befindliche Bremsfluid in die Bremsleitung 3 zurückgepumpt. Die Hydraulikpumpe 7 wird durch einen Elektromotor 8 betätigt, der ebenfalls von der elektronischen Steuereinheit ECU gesteuert wird. Die erste Elektromagnetventilanordnung 5a, 5b kann auch als mechanisches Mengenregelventil anstelle des ersten Elektromagnetventils 5a oder mit einem 3/2-Wegeventil anstelle der beiden Elektromagnetventile 5a, 5b ausgestaltet sein.

Die Bremsdruckgebereinheit 2 weist zur Verstärkung der über das Bremspedal 1 eingeleiteten Betätigungskraft einen pneumatischen Bremskraftverstärker 21 auf. Eine bewegliche Wand 22 unterteilt den pneumatischen Bremskraftverstärker 21 in eine Unterdruckkammer 23 und eine Druckkammer 24. Zur Erzeugung des Unterdrucks ist die Unterdruckkammer 23 über eine Leitung 17 an eine als Unterdruckpumpe 15 ausgebildete Hilfsenergiequelle angeschlossen, die gemeinsam mit der Hydraulikpumpe 7 von dem Elektromotor 8 angetrieben wird. Eine Drucksensoranordnung 25 erfaßt den Unterdruck in der Unterdruckkammer 23 und führt der elektronischen Steuereinheit ECU ein entsprechendes den momentan herrschenden Druck wiedergebendes Signal zu. Bei einem nicht ausreichenden Unterdruck wird, durch die elektronische Steuereinheit ECU gesteuert, der Elektromotor 8 betätigt, so daß die Pumpe den Unterdruck in der Unterdruckkammer 23 erhöht. Alternativ zu der Steuerung des Motors 8 durch die elektronische Steuereinheit ECU kann die Drucksensoranordnung 25 auch als einfacher, den Elektromotor 8 ein/ausschaltender Druckschalter ausgeführt sein.

Der Bremskraftverstärker 21 ist über eine Elektromagnetanordnung 26 auch elektrisch steuerbar, so daß Bremsvorgänge auch unabhängig von einer Betätigung des Bremspedals 1 ausführbar sind. Dies dient beispielsweise zur Durchführung einer Antriebsschlupfregelung oder einer Fahrdynamikregelung. Des weiteren ist eine Sensoreinrichtung 11 zur Erfassung einer mit der Betätigung des Bremspedals in Beziehung stehenden Größe (Pedalweg, Pedalkraft, Pedalbetätigungsgeschwindigkeit) vorgesehen, um auch Bremsungen in Notsituationen, beispielsweise bei Überschreiten einer bestimmten Pedalbetätigungsgeschwindigkeit oder in Abhängigkeit von Abstandsradarmessungen durchzuführen.

Die Erzeugung des Unterdrucks über eine zusätzliche Unterdruckpumpe ist bei Kraftfahrzeugen notwendig, deren Antriebsmotor keinen oder keinen ausreichenden Unterdruck erzeugt. Dies gilt beispielsweise für Elektrofahrzeuge oder für Dieselfahrzeuge. Aber auch bei Fahrzeugen mit Ottomotoren, bei denen der Ottomotor einen für den Normalbetrieb ausreichenden Unterdruck bereitstellt, sind durch den Einsatz einer zusätzlichen Unterdruckpumpe gemäß der Erfindung Vorteile zu erzielen. Beispielsweise kann bei einer Antriebsschlupfregelung, bei der in der Radbremse 4 ein Hydraulikdruck aufgebaut wird, ohne daß das Bremspedal 1 betätigt wird, sondern dies durch den elektrisch gesteuerten Bremskraftverstärker 21 erfolgt, der Fall eintreten, daß gleichzeitig das Gaspedal betätigt und somit die Drosselklappe geöffnet ist. In diesem Fall kann der von dem Ottomotor erzeugte Unterdruck nicht mehr in allen Betriebsbedingungen ausreichend sein, um den für die Betätigung der Bremsdruckgebereinheit 2 erforderlichen Unterdruck zu erzeugen.

Außerdem kann durch eine steuerbare Hilfsenergiequelle gemäß der Erfindung eine stärkere Druckdifferenz in dem pneumatischen Bremskraftverstärker aufgebaut werden, als dies bei der Druckdifferenz zwischen Atmosphärendruck und dem Ansaugdruck eines Ottomotors der Fall ist. Dies hat zur Folge, daß entweder eine höhere Bremsdynamik erzielbar ist, oder ein kleinerer Bremskraftverstärker verwendet werden kann. Letzteres kann zu erheblichen Platzeinsparungen führen.

Der Elektromotor 8 weist eine Abtriebswelle 8a auf. Die hydraulische Pumpe 7 weist eine Antriebswelle 7a auf und die pneumatische Pumpe 15 weist eine Antriebswelle 15a auf. Die Abtriebswelle 8a und die beiden Antriebswellen 7a, 15a sind koaxial zueinander ausgerichtet und starr miteinander verkoppelt. Um die Belastungen des Elektromotors zu reduzieren, ist die Unterdruckpumpe 15 auch lastfrei betreibbar. Dazu ist in der Leitung 17 ein durch die elektronische Steuereinheit ECU ansteuerbares elektromagnetisch betätigbares Umschaltventil 12 vorgesehen, durch dessen Betätigung die Einlaßseite 15b der pneumatischen Pumpe 15 mit Atmosphärendruck beaufschlagbar ist. Dazu wird das Elektromagnetventil 12 in die betätigte Stellung II gebracht. Dies hat zur Folge, daß zwischen der Einlaßseite 15b und der Auslaßseite 15c der pneumatischen Pumpe 15 keine Druckdifferenz besteht. Somit steht beispielsweise bei einer Antiblockierregelung die gesamte Leistung des Elektromotors für die Hydraulikpumpe 7 zur Verfügung. Eine Erzeugung von Unterdruck durch die pneumatische Pumpe 15 erfolgt im Normalfall bei nicht betätigtem Bremspedal 1 bzw. bei Lösen des Bremspedals 1, so daß in der Hydraulikleitung 3 kein Hydraulikdruck vorhanden ist und die Hydraulikpumpe 7 nahezu lastfrei betrieben wird. Damit steht praktisch die gesamte Leistung des Elektromotors 8 für die pneumatische Pumpe 15 zur Verfügung. Zum lastfreien Betrieb der Hydraulikpumpe 7 besteht auch die Möglichkeit, das Elektromagnetventil 5b in seine betätigte Stellung II zu bringen, während das Elektromagnetventil 5a in seiner unbetätigten Stellung I bleibt, so daß Hydraulikfluid über die Bremsleitungen 3a im Kreis 3b gepumpt wird.

Da der Leistungsbedarf zum Betrieb der pneumatischen Pumpe 15 geringer ist als der Leistungsbedarf der hydraulischen Pumpe 7 kann der Betrieb des Elektromotors 8 mit jeweils angepaßter Drehzahl erfolgen. Dies heißt, daß bei der Erzeugung von Unterdruck mittels der pneumatischen Pumpe 15 eine kleinere Drehzahl als bei der Rückförderung durch die hydraulische Pumpe 7 im Fall einer Antiblockierregelung eingestellt wird. Dies hat auch den Vorteil, daß beim Betrieb der pneumatischen Pumpe 15 die Geräuschentwicklung reduziert ist und weniger elektrische Energie benötigt wird.

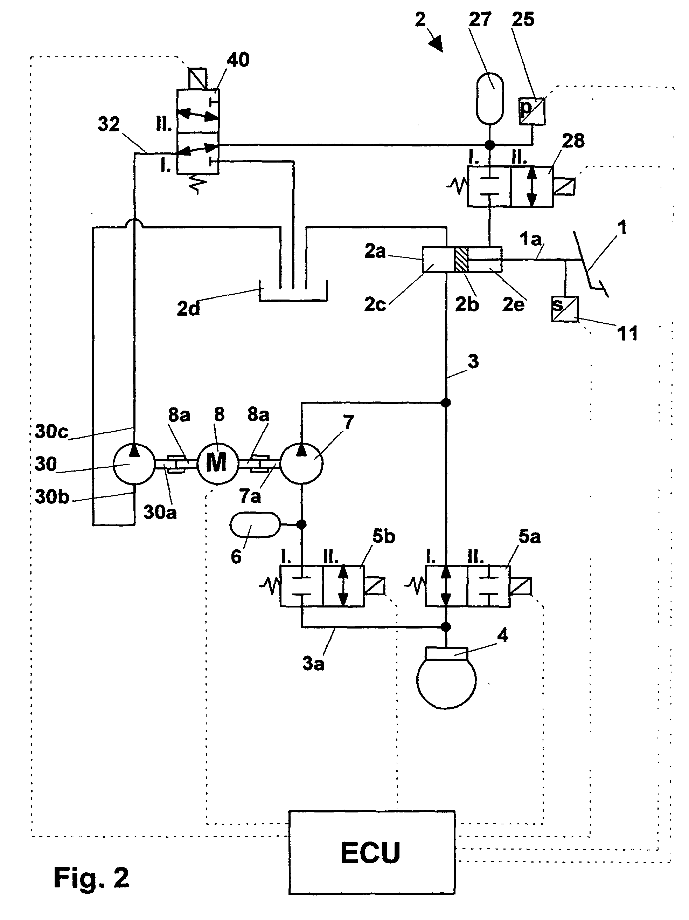

In der nachstehenden Beschreibung der Ausführungsform gemäß Fig. 2 sind gegenüber Fig. 1 unveränderte oder entsprechende Bauteile mit gleichen Bezugszeichen wie in Fig. 1 versehen.

Bei der in Fig. 2 schematisch dargestellten zweiten Ausführungsform einer erfindungsgemäßen Fahrzeugbremsanlage weist die Bremsdruckgebereinheit 2 zur Verstärkung der durch das Bremspedal 1 eingeleiteten Betätigungskraft eine zweite Druckkammer 2e auf, die bei elektrischer Betätigung eines Elektromagnetventils 28 aus einem Druckspeicher 37 mit Bremsfluid beaufschlagbar ist. Im elektrisch unbetätigten Zustand sperrt das Elektromagnetventil 28 die Verbindung zwischen dem Druckspeicher 27 und der zweiten Druckkammer 2e der Bremsdruckgebereinheit 2.

Eine derartige Anordnung zur Verstärkung der Betätigungskraft wird auch als "hydraulischer Booster" bezeichnet und kann auch zur Einleitung von automatischen Bremsvorgängen, also unabhängig von einer Betätigung des Bremspedals 1 dienen. Da die Betätigung des Bremspedals 1 durch eine Sensoreinrichtung 11 elektrisch erfaßt wird, kann ein solches System auch für ein sogenanntes "Brake-by-Wire"-System verwendet werden, wobei durch die mechanische Verbindung des Bremspedals 1 mit der Bremsdruckgebereinheit 2 eine hydraulisches Notbremssystem ("Push-Through"-System) bereitgestellt wird. Hierbei wird die pneumatische Pumpe 15 aus Fig.1 durch eine hydraulische Pumpe 30 ersetzt, die zur Druckversorgung des Druckspeichers 27 dient.

Der in dem Druckspeicher 27 anstehende hydraulische Druck wird mittels einer Drucksensoranordnung 25 erfaßt, um bei Unterschreitung eines vorbestimmten Grenzwertes ein Nachladen durch die hydraulische Pumpe 30 zu bewirken. Dazu saugt die Pumpe 30 Hydraulikfluid aus dem Hydraulikfluidbehälter 2d an, um das Hydraulikfluid über eine Leitung 32 in den Druckspeicher 27 zu fördern.

Auch hierbei ist die Hydraulikpumpe 30 mit der Hydraulikpumpe 7 der Druckmodulationseinrichtung getrieblich gekoppelt, so daß beide Pumpen 30, 7 durch den Elektromotor 8 gleichzeitig angetrieben werden. Um auch zu ermöglichen, daß die Hydraulikpumpe 30 im Leerlauf arbeiten kann, d.h. daß die Druckeinlaßseite 30b und die Druckauslaßseite 30c auf gleichem Druckniveau liegen, ist ein von der elektronischen Steuereinrichtung ECU steuerbares drittes Elektromagnetventil 40 in der Hydraulikleitung 32 zwischen der Druckauslaßseite 30c und dem Elektromagnetventil 28 angeordnet.

Das Elektromagnetventil 40 ist als Umschaltventil ausgebildet, das in seiner gezeigten ersten Stellung I die Hydraulikpumpe 30 mit dem Elektromagnetventil 28 bzw. mit dem Druckspeicher 27 verbindet, während es in seiner betätigten zweiten Stellung II die Druckeinlaßseite und die Druckauslaßseite der Hydraulikpumpe 30 mit dem Hydraulikdruckreservoir 2d verbindet. In dieser zweiten betätigten Stellung II ist auch der Druckspeicher 27 gegen die Hydraulikpumpe 30 abgesperrt.

Im übrigen stimmt die Ausführungsform nach Fig. 2 in ihrem Aufbau und in ihrer Funktion mit der Ausführungsform nach Fig. 1 überein, so daß sich eine weitere detallierte Beschreibung erübrigt.

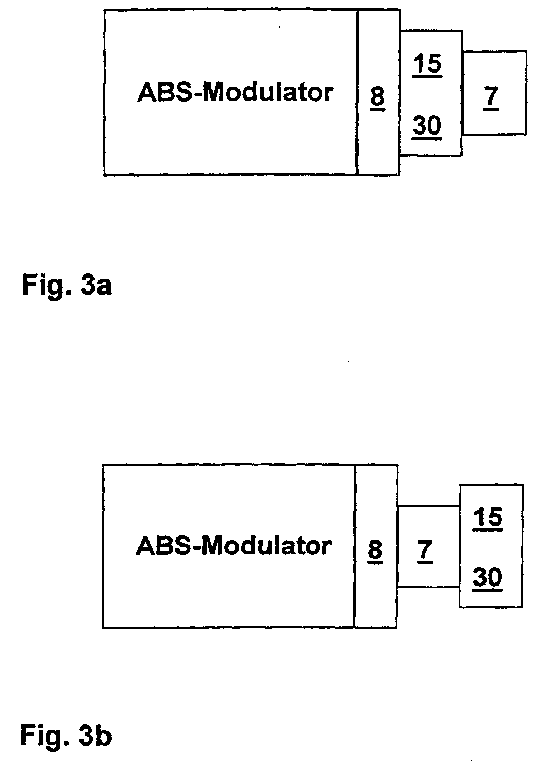

In Fig. 3a und 3b ist eine Möglichkeit für eine Einbauraum sparende Integration der zusätzlichen Untedruckpumpe 15 bzw. der zusätzlichen Hydraulikpumpe 30 in ein bestehendes Antiblockiersystem schematisch dargestellt. Unter ABS-Modulator ist hier eine Baueinheit zu verstehen, die die Ventileinrichtung 5, den Druckspeicher 6 sowie die von dem Elektromotor 8 angetriebene hydraulische Pumpe 7 für sämtliche Radbremsen 4 des Fahrzeugs umfaßt. Bei der Ausführungsform nach Fig. 3a ist die zusätzliche pneumatische bzw. hydraulische Pumpe 15, 30 zwischen dem Elektromotor 8 und der hydraulischen Pumpe 7 angeordnet, während bei der Ausführungsform nach Fig. 3b die zusätzliche Pumpe 15, 30 auf der der hydraulischen Pumpe 7 abgewandten Seite des Elektromotors 8 angeordnet ist. Der Vorteil der beiden Ausführungsformen ist, daß die zusätzliche Pumpe 15, 30 axial zur Antriebswelle des Elektromotors 7 angeordnet ist und die getriebliche Kopplung der Antriebe einfach herstellbar ist. Als Pumpentyp für die pneumatische Unterdruckpumpe 15 ist in besonders vorteilhafter Weise eine Flügelzellenpumpe geeignet, während die hydraulische Pumpe 7 und die Nachladepumpe 30 in bekannter Weise als Radialkolbenpumpen oder Axialkolbenpumpen ausgeführt sind.

## Patentansprüche

1. Elektronisch steuerbare Bremsanlage für Kraftfahrzeuge, mit
- einer durch ein Bremspedal (1) betätigbaren Bremsdruckgebereinheit (2), die wenigstens eine Radbremse (4) des Kraftfahrzeuges durch einen Hydraulikfluidpfad (3) mit Hydraulikfluid speist,
- einer ersten elektromagnetischen Ventilanordnung (5a, 5b), die in dem Hydraulikfluidpfad zwischen der Bremsdruckgebereinheit (2) und der Radbremse (4) angeordnet ist, um Druckaufbau-, Druckabbau- und/oder Druckhaltephasen in der Radbremse (4) zu steuern,
- einer motorbetriebenen steuerbaren Hydraulikdruckquelle (7), die die Radbremse (4) zusätzlich zu dem oder anstelle der Bremsdruckgebereinheit (2) mit Hydraulikfluid speist, und
- einer motorbetriebenen steuerbaren Hilfsenergiequelle (15, 30), die eine Betätigung der Bremsdruckgebereinheit (2) durch das Bremspedal(1) unterstützt oder anstelle des Bremspedals (1) eine Betätigung der Bremsdruckgebereinheit (2) bewirkt, wobei die steuerbare Hilfsenergiequelle (15, 30) und die steuerbare Hydraulikdruckquelle (7) durch den gleichen Motor (8) angetrieben werden und mit diesem in ständiger getrieblicher (8a, 7a, 15a, 30a) Verbindung stehen, und wobei
- die erste Ventilanordnung (5a, 5b) und der Motor (8) durch eine elektronische Steuereinheit (ECU) im Betrieb der Bremsanlage mit entsprechenden Steuersignalen angesteuert werden,
**dadurch gekennzeichnet, daß**
- eine Einlaßseite (7b) und eine Auslaßseite (7a) der steuerbaren Hydraulikdruckquelle (7) in Abhängigkeit von einer Ventilstellung der ersten Ventilanordnung (5a, 5b) auf etwa gleiches Druckniveau bringbar sind, indem die erste Ventilanordnung (5a, 5b) durch Steuersignale aus der elektronischen Steuereinheit (ECU) in eine von der Druckaufbau-, Druckabbau- oder Druckhaltephase abweichende Stellung gebracht wird.

2. Elektronisch steuerbare Bremsanlage für Kraftfahrzeuge nach Anspruch 1, bei der die steuerbare Hilfsenergiequelle eine pneumatische Pumpe (15) ist, die auf einen mit der Bremsdruckgebereinehit (2) gekoppelten pneumatischen Bremskraftverstärker (21) wirkt.

3. Elektronisch steuerbare Bremsanlage für Kraftfahrzeuge nach Anspruch 2, bei der zwischen der pneumatischen Pumpe (15) und dem Bremskraftverstärker (21) eine zweite steuerbare Ventilanordnung (12) angeordnet ist.

4. Elektronisch steuerbare Bremsanlage für Kraftfahrzeuge nach Anspruch 2 oder 3, bei der die pneumatische Pumpe (15) in Abhängigkeit von der Stellung der zweiten Ventilanordnung (12) entweder mit dem Bremskraftverstärker (21) verbunden ist oder eine Einlaßseite (15b) und eine Auslaßseite (15c) der pneumatischen Pumpe (15) auf etwa gleiches Druckniveau bringbar sind.

5. Elektronisch steuerbare Bremsanlage für Kraftfahrzeuge nach Anspruch 1, bei der die steuerbare Hilfsenergiequelle eine hydraulische Pumpe (30) ist, die auf eine mit der Bremsdruckgebereinehit (2) gekoppelte Zylinder/Kolbenanordnung (2a, 2b) wirkt.

6. Elektronisch steuerbare Bremsanlage für Kraftfahrzeuge nach Anspruch 5, bei der zwischen der hydraulischen Pumpe (30) und der Zylinder/Kolbenanordnung (2a, 2b) eine zweite steuerbare Ventilanordnung (40) angeordnet ist.

7. Elektronisch steuerbare Bremsanlage für Kraftfahrzeuge nach einem der Ansprüche 2, 5 oder 6, bei der die hydraulische Pumpe (30) in Abhängigkeit von der Stellung der zweiten Ventilanordnung (40) entweder mit der Zylinder/Kolbenanordnung (2a, 2b) verbunden ist, oder eine Einlaßseite (30b) und eine Auslaßseite (30c) der hydraulischen Pumpe (30) auf etwa gleiches Druckniveau bringbar sind.

8. Elektronisch steuerbare Bremsanlage für Kraftfahrzeuge nach einem der Ansprüche 2, 5, 6 oder 7, bei der die hydraulische Pumpe (30) mit einem Druckspeicher (27) verbindbar ist, wobei der Druckspeicher (27) und/oder die hydraulische Pumpe (30) durch eine dritte Ventilanordnung (28) gesteuert mit der Zylinder/Kolbenanordnung (2a, 2b) verbindbar sind.

9. Elektronisch steuerbare Bremsanlage für Kraftfahrzeuge nach einem der Ansprüche 2, 5, 6, 7 oder 8, bei der die Bremsdruckgebereinheit (2) wenigstens eine Druckkammer (2c) aufweist, die über die erste Ventilanordnung (5a, 5b) mit wenigstens einer Radbremse (4) verbindbar ist, und
wenigstens eine zweite Druckkammer (2e) aufweist, die mit der hydraulischen Pumpe (30) und/oder dem Druckspeicher (27) über die zweite und/oder dritte Ventilanordnung (40, 28) verbindbar ist.

10. Elektronisch steuerbare Bremsanlage für Kraftfahrzeuge nach einem der Ansprüche 2 bis 9, bei der der Motor (8) wenigstens eine Abtriebswelle (8a) und die hydraulische Pumpe (7) und die pneumatische bzw. hydraulische Pumpe (15; 30) jeweils eine Antriebswelle (7a, 15a, 30a) aufweisen, und wobei die Abtriebswelle und die beiden Antriebswellen koaxial zueinander angeordnet und starr miteinander verbunden sind.

11. Elektronisch steuerbare Bremsanlage für Kraftfahrzeuge nach einem der Ansprüche 2 bis 4 oder 10, bei der die pneumatische Pumpe (15) eine Unterdruckpumpe ist, die insbesondere als. Flügelzellenpumpe ausgebildet ist.

12. Elektronisch steuerbare Bremsanlage für Kraftfahrzeuge nach einem der Ansprüche 5 bis 10, bei der die hydraulische Pumpe eine Druckpumpe (30) ist, die insbesondere als Radialkolbenpumpe oder als Axialkolbenpumpe ausgebildet ist.

## Claims

1. An electronically controllable braking system for motor vehicles, comprising
- a brake pressure generator unit (2) which is adapted to be actuated by a brake pedal (1) and supplies hydraulic fluid via a hydraulic fluid path (3) to at least one wheel brake (4) of the motor vehicle,
- a first electromagnetic valve arrangement (5a, 5b) which is arranged in the hydraulic fluid path between the brake pressure generator unit (2) and the wheel brake (4) for controlling the pressure build-up, pressure relief and/or pressure holding phases in the wheel brake (4),
- a motor-driven controllable hydraulic pressure source (7) which, in addition to or in lieu of the brake pressure generator unit (2), supplies hydraulic fluid to the wheel brake (4), and
- a motor-driven controllable auxiliary energy source (15, 30) which boosts an actuation of the brake pressure generator unit (2) by the brake pedal (1) or which effects an actuation of the brake pressure generator unit (2) in lieu of the brake pedal (1), with the controllable auxiliary energy source (15, 30) and the controllable hydraulic pressure source (7) being driven by the same motor (8) and being continuously connected with same via a gear mechanism (8a, 7a, 15a, 30a), and wherein
- the first valve arrangement (5a, 5b) and the motor (8) are controlled by an electronic control unit (ECU) during operation of the braking system by means of corresponding control signals,
**characterised in that**
- an inlet side (7b) and an outlet side (7a) of the controllable hydraulic pressure source (7) can be brought to approximately the same pressure level, depending on a valve position of the first valve arrangement (5a, 5b), **in that** the first valve arrangement (5a, 5b) is brought by control signals from the electronic control unit (ECU) into a position which differs from the pressure build-up, pressure relief, or pressure holding phase.

2. The electronically controllable braking system for motor vehicles according to Claim 1, wherein the controllable auxiliary energy source is a pneumatic pump (15) which acts on a pneumatic brake booster (21) coupled with the brake pressure generator unit (2).

3. The electronically controllable braking system for motor vehicles according to Claim 2, wherein a second controllable valve arrangement (12) is arranged between the pneumatic pump (15) and the brake booster (21).

4. The electronically controllable braking system for motor vehicles according to Claim 2 or 3, wherein the pneumatic pump (15) is either connected with the brake booster (21), or an inlet side (15b) and an outlet side (15c) of the pneumatic pump (15) can be brought to approximately the same pressure level, depending on the position of the second valve arrangement (12).

5. The electronically controllable braking system for motor vehicles according to Claim 1, wherein the controllable auxiliary energy source is a hydraulic pump (30) which acts on a cylinder/piston arrangement (2a, 2b) coupled with the brake pressure generator unit (2).

6. The electronically controllable braking system for motor vehicles according to Claim 5, wherein a second controllable valve arrangement (40) is arranged between the hydraulic pump (30) and the cylinder/piston arrangement (2a, 2b).

7. The electronically controllable braking system for motor vehicles according to one of Claims 2, 5 or 6, wherein the hydraulic pump (30) is either connected with the cylinder/ piston arrangement (2a, 2b), or an inlet side (30b) and an outlet side (30c) of the hydraulic pump (30) can be brought to approximately the same pressure level, depending on the position of the second valve arrangement (40).

8. The electronically controllable braking system for motor vehicles according to one of Claim 2, 5, 6 or 7, wherein the hydraulic pump (30) can be connected with a pressure accumulator (27), with the pressure accumulator (27) and/or the hydraulic pump (30) being connectable in a controlled manner with the cylinder/piston arrangement (2a, 2b) through a third valve arrangement (28).

9. The electronically controllable braking system for motor vehicles according to one of Claims 2, 5, 6, 7 or 8, wherein the brake pressure generator unit (2) comprises at least one pressure chamber (2c) which is connectable with at least one wheel brake (4) via the first valve arrangement (5a, 5b), and comprises at least a second pressure chamber (2e) which is connectable with the hydraulic pump (30) and/or the pressure accumulator (27) via the second and/or the third valve arrangement (40, 28).

10. The electronically controllable braking system for motor vehicles according to one Claims 2 to 9, wherein the motor (8) comprises at least one output shaft (8a) and the hydraulic pump (7) and the pneumatic and/or hydraulic pump (15, 30) each comprises one drive shaft (7a, 15a, 30a), and wherein the output shaft and the two drive shafts are arranged coaxially with each other and are rigidly connected with each other.

11. The electronically controllable braking system for motor vehicles according to one of Claims 2 to 4 or 10, wherein the pneumatic pump (15) is a vacuum pump which in particular is designed as a vane-cell pump.

12. The electronically controllable braking system for motor vehicles according to one of Claims 5 to 10, wherein the hydraulic pump is a pressure pump (30) which in particular is designed as a radial piston pump or as an axial piston pump.

## Revendications

1. Système de freinage à commande électronique pour véhicules à moteur, avec
- une unité génératrice de pression de freinage (2) à actionner par une pédale de frein (1), qui alimente en fluide hydraulique au moins un frein de roue (4) du véhicule à moteur via un chemin de fluide hydraulique (3),
- un premier dispositif de vanne électromagnétique (5a, 5b), qui est disposé dans le chemin de fluide hydraulique entre l'unité génératrice de pression de freinage (2) et le frein de roue (4), afin de commander les phases de montée, de diminution et/ou de maintien de la pression dans le frein de roue (4),
- une source de pression hydraulique (7) commandable, entraînée par un moteur, qui alimente le frein de roue (4) en fluide hydraulique en plus de ou au lieu de l'unité génératrice de pression de freinage (2), et
- une source d'énergie auxiliaire (15, 30) commandable, entraînée par un moteur, qui soutient un actionnement de l'unité génératrice de pression de freinage (2) par la pédale de frein (1) ou qui assure au lieu de la pédale de frein (1) un actionnement de l'unité génératrice de pression de freinage (2), la source d'énergie auxiliaire commandable (15, 30) et la source de pression hydraulique commandable (7) étant entraînées par le même moteur (8) et sont en liaison d'entraînement permanente (8a, 7a, 15a, 30a) avec celui-ci, et
- le premier dispositif de vanne (5a, 5b) et le moteur (8) étant commandés par une unité de commande électronique (ECU) avec des signaux de commande correspondants pendant le fonctionnement du système de freinage,
**caractérisé en ce que**
- un côté entrée (7b) et un côté sortie (7a) de la source de pression hydraulique commandable (7) peuvent être portés environ au même niveau de pression en fonction d'une position de vanne du premier dispositif de vanne (5a, 5b), du fait que le premier dispositif de vanne (5a, 5b) est amené par des signaux de commande émanant de l'unité de commande électronique (ECU) dans une position s'écartant de la phase de montée, de diminution ou de maintien de la pression.

2. Système de freinage à commande électronique pour véhicules à moteur selon la revendication 1, dans lequel la source d'énergie auxiliaire commandable est une pompe pneumatique (15), qui agit sur un amplificateur pneumatique de force de freinage (21) couplé à l'unité génératrice de pression de freinage (2).

3. Système de freinage à commande électronique pour véhicules à moteur selon la revendication 2, dans lequel un deuxième dispositif de vanne commandable (12) est disposé entre la pompe pneumatique (15) et l'amplificateur de force de freinage (21).

4. Système de freinage à commande électronique pour véhicules à moteur selon la revendication 2 ou 3, dans lequel, en fonction de la position du deuxième dispositif de vanne (12), soit la pompe pneumatique (15) est raccordée à l'amplificateur de force de freinage (21), soit un côté entrée (15b) et un côté sortie (15c) de la pompe pneumatique (15) peuvent être portés environ au même niveau de pression.

5. Système de freinage à commande électronique pour véhicules à moteur selon la revendication 1, dans lequel la source d'énergie auxiliaire commandable est une pompe hydraulique (30), qui agit sur un dispositif à piston/cylindre (2a, 2b) couplé à l'unité génératrice de pression de freinage (2).

6. Système de freinage à commande électronique pour véhicules à moteur selon la revendication 5, dans lequel un deuxième dispositif de vanne commandable (40) est disposé entre la pompe hydraulique (30) et le dispositif à piston/cylindre (2a, 2b).

7. Système de freinage à commande électronique pour véhicules à moteur selon l'une quelconque des revendications 2, 5 ou 6, dans lequel, en fonction de la position du deuxième dispositif de vanne (40), soit la pompe hydraulique (30) est raccordée au dispositif à piston/cylindre (2a, 2b), soit un côté entrée (30b) et un côté sortie (30c) de la pompe hydraulique (30) peuvent être portés environ au même niveau de pression.

8. Système de freinage à commande électronique pour véhicules à moteur selon l'une quelconque des revendications 2, 5, 6 ou 7, dans lequel la pompe hydraulique (30) est raccordable à un accumulateur de pression (27), l'accumulateur de pression (27) et/ou la pompe hydraulique (30) étant raccordable au dispositif à piston/cylindre (2a, 2b) par commande par un troisième dispositif de vanne (28).

9. Système de freinage à commande électronique pour véhicules à moteur selon l'une quelconque des revendications 2, 5, 6, 7 ou 8, dans lequel l'unité génératrice de pression de freinage (2) présente au moins une chambre de pression (2c) raccordable à au moins un frein de roue (4) par le premier dispositif de vanne (5a, 5b) et présente au moins une deuxième chambre de pression (2e), qui raccordable à la pompe hydraulique (30) et/ou à l'accumulateur de pression (27) par le deuxième et/ou le troisième dispositif de vanne (40, 28).

10. Système de freinage à commande électronique pour véhicules à moteur selon l'une quelconque des revendications 2 à 9, dans lequel le moteur (8) présente au moins un arbre de sortie (8a) et la pompe hydraulique (7) et la pompe pneumatique respectivement la pompe hydraulique (15, 30) présentent chacune un arbre d'entraînement (7a, 15a, 30a), et l'arbre de sortie et les deux arbres d'entraînement étant disposés coaxialement les uns aux autres et sont reliés rigidement les uns aux autres.

11. Système de freinage à commande électronique pour véhicules à moteur selon l'une quelconque des revendications 2 à 4 ou 10, dans lequel la pompe pneumatique (15) est une pompe à vide, en particulier une pompe à palettes.

12. Système de freinage à commande électronique pour véhicules à moteur selon l'une quelconque des revendications 5 à 10, dans lequel la pompe hydraulique est une pompe refoulante (30), en particulier une pompe à pistons radiaux ou une pompe à pistons axiaux.
